# EUROPEAN PATENT APPLICATION

(11) **EP 0 857 759 A1**
(43) Date of publication of application: **12.08.1998**
(21) Application number: 96935401.8
(22) Date of filing: 22.10.1996
(51) Int. Cl.: C08L 67/02, C08L 67/04, C08K 5/54, C08K 3/00

(54) **SYNTHETIC RESIN COMPOSITION**

(30) Priority: 23.10.1995 JP 274185/95
(71) Applicant: POLYPLASTICS CO. LTD., Chuo-Ku Osaka-shi Osaka 541 (JP)
(72) Inventor: SAITO, Tatsuya, Shizuoka 418 (JP); ISHIKAWA, Takayuki, Shizuoka 418 (JP)
(74) Representative: Jackson, Peter
(86) International application number: JP9603064
(87) International publication number: WO9715628

(57) **Abstract**

A synthetic resin composition which comprises a blend of a thermoplastic resin which does not exhibit anisotropy in a molten state, such as a polyester resin, and a liquid-crystal polyester resin, and which is reduced in delamination and excellent in mechanical properties, can be produced by blending 100 parts by weight of a resin component comprising 1 part by weight to less than 50 parts by weight of a thermoplastic resin (a) which does not exhibit anisotropy in a molten state and more than 50 parts by weight to 99 parts by weight of a liquid-crystal polyester resin (b) capable of forming an anisotropic molten phase with 0.01 to 3.0 parts by weight of at least one silane compound (c) selected from among vinylalkoxysilanes, aminoalkoxysilanes and mercaptoalkoxysilanes.

## Description

### Background of the Invention

### Field of the Invention:

This invention relates to a synthetic resin composition which comprises a blend of a thermoplastic resin, generally a polyester resin, which does not exhibit anisotropy in a molten state and a liquid-crystal polyester resin, more particularly, it relates to a synthetic resin composition which is reduced in delamination and excellent in mechanical properties.

### Description of Prior Art:

A liquid-crystal polyester resin capable of forming an anisotropic molten phase is a thermoplastic resin having numerous properties such as high strength, high rigidity, high heat resistance, ease of molding due to high fluidity in a molten state, but accompanied with disadvantages such as anisotropy in mechanical properties, and high cost. On the other hand, a thermoplastic resin which does not form an anisotropic molten phase is relatively cheap, and exhibits reduced anisotropy in mechanical properties, but has disadvantages such as poor mechanical properties and poor heat resistance. Therefore, many trials have been made to make the most of the both advantages while making up their disadvantages by mixing and using them.

However, when they are simply mixed, strength at the interface between a liquid-crystal polyester resin and a resin which does not form an anisotropic molten phase is not sufficient, and such blend readily results in delamination and insufficient mechanical strength.

### Disclosure of the Invention

### Summery of the invention:

The present invention is aimed at providing a resin composition which comprises a liquid-crystal polyester resin exhibiting anisotropy in a molten state, and a thermoplastic resin, generally a polyester, which does not exhibit anisotropy in a molten state, which is reduced in delamination and excellent in mechanical strength.

The present inventors have studied intensively considering the above problems of a mixture of a thermoplastic resin which does not exhibit anisotropy in a molten state and a liquid-crystal polyester resin. As the results, we have found that a composition which is improved in delamination and also has excellent physical properties such as rigidity and strength can be obtained by using particular silane compound(s) together with said thermoplastic resin and said liquid-crystal polyester resin. We have attained the present invention based on such findings.

That is, the present invention relates to a synthetic resin composition produced by blending 100 parts by weight of a resin component comprising 1 part by weight to less than 50 parts by weight of a thermoplastic resin (a) which does not exhibit anisotropy in a molten state and more than 50 parts by weight to 99 parts by weight of a liquid-crystal polyester resin (b) capable of forming an anisotropic molten phase with 0.01 to 3.0 parts by weight of at least one silane compound (c) selected from among vinylalkoxysilanes, aminoalkoxysilanes and mercaptoalkoxysilanes.

In other words, the present invention is a synthetic resin composition produced by blending 100 parts by weight of a resin component comprising (a) 1 part by weight to less than 50 parts by weight of a thermoplastic resin which does not exhibit anisotropy in a molten state and (b) more than 50 parts by weight to 99 parts by weight of a liquid-crystal polyester resin capable of forming an anisotropic molten phase with (c) 0.01 to 3.0 parts by weight of at least one silane compound selected from among vinylalkoxysilanes, aminoalkoxysilanes and mercaptoalkoxysilanes.

The present invention will be illustrated in detail.

### Detailed Explanation of the Invention:

A thermoplastic resin (a) used in the present invention may be any conventionally used thermoplastic resin so long as it does not exhibit anisotropy in a molten state, and a thermoplastic resin having at least one selected from the group consisting of ester, amide, imide, urethane, carboxyl, hydroxyl, amino and mercapto in the main chain and/or at the end(s) thereof is preferred because of improved delamination and enhanced mechanical strength of the resin composition. A thermoplastic resin having at least one selected from the group consisting of ester, amide, imide, carboxyl, hydroxyl, amino and mercapto in the main chain and/or at the end(s) thereof is more preferred. Further, a thermoplastic resin having at least one of such groups in the main chain or at the end(s) thereof is particularly preferred.

The embodiment of such thermoplastic resins includes, for example, polyester resin such as polyethylene terephthalate, polybutylene terephthalate, polycarbonate; polyamide such as 6-nylon, 66 nylon; polyimide, polyurethane, polyphenylene oxide having hydroxyl group at the end(s) thereof; polysulfone, polyether sulfone, polyether ether ketone, polyoxymethylene, polyphenylene sulfide having mercapto group at the end(s) thereof, polymethyl methacrylate having ester in the main chain, polymethyl acrylate, polyvinyl acetate, etc. Copolymers consisting of more than two of the constituent monomers of these resins may be employed. Among them, polyester resins are preferably used.

A liquid-crystal polyester resin (b) used in the present invention is a melt-processed polyester, which has properties wherein the polymer molecular chains are arranged in a regular parallel alignment in a molten state. Such state wherein the molecules are arranged as described above is often referred to as liquid crystalline state.

The properties of a molten phase exhibiting anisotropy can be confirmed by the conventional polarization assay utilizing cross polarizers. More specifically, confirmation of anisotropy in a molten phase can be attained by utilizing a Leitz polarization microscope and observing a molten sample mounted on a Leitz hot stage under nitrogen atmosphere at the magnification of x40. A liquid-crystal polyester resin (b) used in the present invention exhibits optical anisotropy wherein polarized light penetrates even in a molten static phase when observed between cross polarizers.

A liquid-crystal polyester resin (b) suitably used in the present invention has a tendency to be substantially insoluble in a general solvent, therefore not suitable for solution processing. However, these polymers, as mentioned above, can be readily processed by the conventional melt processing.

As a liquid-crystal polyester resin (b) which is used in the present invention and capable of forming an anisotropic molten phase, aromatic polyester and aromatic polyester amide are preferable. Further, polyester partly containing an aromatic polyester and an aromatic polyester amide in the same molecular chain is also one of the preferable examples.

The particularly preferred liquid-crystal polyester resin (b) includes a liquid-crystal aromatic polyester and a liquid-crystal aromatic polyester amide, containing at least one selected from the group consisting of aromatic hydroxycarboxylic acid, aromatic hydroxylamine, aromatic diamine as its constituents. In other words, a liquid-crystal aromatic polyester and a liquid-crystal aromatic polyester amide synthesized using these compounds as starting materials are particularly preferred.

More specifically,
1) polyester mainly consisting of one or two or more selected from the group consisting of aromatic hydroxycarboxylic acid and derivatives thereof;
2) polyester mainly consisting of:
   a) one or two or more selected from the group consisting of aromatic hydroxycarboxylic acid and derivatives thereof,
   b) one or two or more selected from the group consisting of aromatic dicarboxylic acid, alicyclic dicarboxylic acid and derivatives thereof,
   c) one or two or more selected from the group consisting of aromatic diol, alicyclic diol, aliphatic diol and derivatives thereof;
3) polyester amide mainly consisting of:
   a) one or two or more selected from the group consisting of aromatic hydroxycarboxylic acid and derivatives thereof,
   b) one or two or more selected from the group consisting of aromatic hydroxyamine, aromatic diamine and derivatives thereof,
   c) one or two or more selected from the group consisting of aromatic dicarboxylic acid, alicyclic dicarboxylic acid and derivatives thereof; and
4) polyester amide mainly consisting of:
   a) one or two or more selected from the group consisting of aromatic hydroxycarboxylic acid and derivatives thereof,
   b) one or two or more selected from the group consisting of aromatic hydroxyamine, aromatic diamine and derivatives thereof,
   c) one or two or more selected from the group consisting of aromatic dicarboxylic acid, alicyclic dicarboxylic acid and derivatives thereof,
d) one or two ore more selected from the group consisting of aromatic diol, alicyclic diol, aliphatic diol and derivatives thereof.

In synthesis of the aforementioned liquid-crystal aromatic polyester and liquid-crystal aromatic polyester amide, a molecular weight modifier may be used, as necessary, together with the aforementioned components.

Preferred example of the particular compound constituting a liquid-crystal polyester resin (b) used in the present invention includes, for example, naphthalene compounds such as 2,6-naphthalene dicarboxylic acid, 2,6-dihydroxynaphthalene, 1,4-dihydroxynaphthalene and 6-hydroxy-2-naphthoic acid; biphenyl compounds such as 4,4'-diphenyl dicarboxylic acid, 4,4'-dihydroxybiphenyl; para-substituted benzene compounds such as p-hydroxybenzoic acid, terephthalic acid, hydroquinone, p-aminophenol and p-phenylenediamine; and benzene compounds having substituent(s) on its benzene nucleus in addition to that in para-position (wherein such substituent may be selected from the group consisting of chlorine, bromine, methyl, phenyl, 1-phenylethyl), meta-substituted benzene compounds such as isophthalic acid, resorcinol. The compounds represented by the following formulas (I), (II) and (III) are particular compounds constituting, in other words, starting compounds of the liquid-crystal polyester resin (b) used in the present invention:

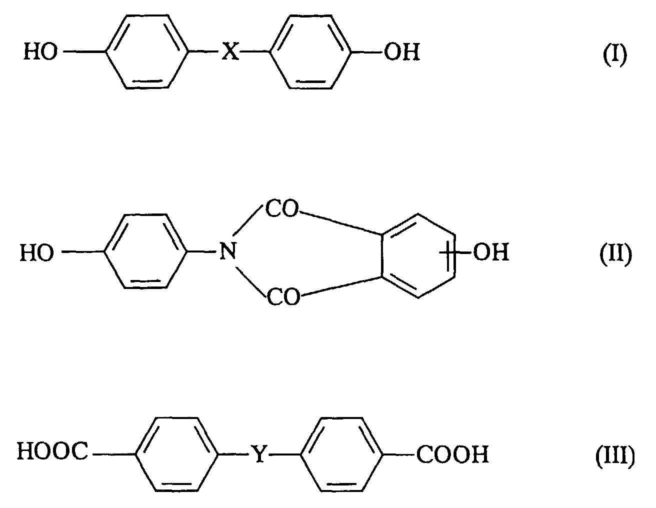

In formula (I), X is a group selected from the group consisting of C₁₋₄ alkylene, alkylidene, a group represented by the formula: -O-, a group represented by the formula:-SO-, a group represented by the formula: - SO₂-, a group represented by the formula: -S-, a group represented by the formula: -CO-; and in formula (III), Y is a group selected from the group consisting of a group represented by the formula: -(CH₂)n- (wherein n is 1 to 4), a group represented by the formula: -O(CH₂)ₙO- (wherein n is 1 to 4).

A liquid-crystal polyester resin (b) used in the present invention may be those having part of a polyalkylene terephthalate or part of a polyalkylene naphthalate which does not form an anisotropic molten phase in the same molecular chain, in addition to the aforementioned constituents. Carbon number of the alkylene group in this polyalkylene terephthalate part and the polyalkylene naphthalate part is 2 to 4. As such parts, polyethylene terephthalate is particularly preferred.

A liquid-crystal aromatic polyester and a liquid-crystal aromatic polyester amide containing one or two or more compound(s) selected from the group comprising naphthalene compound, biphenyl compound, para-substituted benzene compound, among the above constituents, as the essential constituent(s) are more preferable examples of the liquid-crystal polyester resin (b). Among p-substituted benzene compounds, p-hydroxybenzoic acid, methylhydroquinone and 1-phenylethylhydroquinone are particularly preferred.

In the present invention, a thermoplastic resin (a) which does not exhibit anisotropy in a molten phase and a liquid-crystal polyester resin (b) capable of forming an anisotropic molten phase are used at such ratio that the liquid-polyester resin (b) should be more than 50 parts by weight to 99 parts by weight in the total 100 parts by weight of the resin. When the ratio of a thermoplastic resin (a) to a liquid-crystal polyester resin (b) is within the range of the present invention, improvement of strength and modulus of elasticity of the resin composition may be obtained due to the coexisting silane compound (c). When the ratio is within the range of the present invention, the matrix in the resin composition is constituted by a liquid-crystal polyester resin (b), resulting in desired physical properties of the resin composition, such as temperature of thermal deformation.

Silane compounds (c) used in the present invention include, for example one or two or more selected from the group consisting of vinylalkoxysilanes, aminoalkoxysilanes and mercaptoalkoxysilanes. Example of vinylalkoxysilanes includes, for example, vinyltriethoxysilane, vinyltrimethoxysilane, vinyltris(β-methoxyethoxy)silane; example of aminoalkoxysilanes includes, for example, γ-aminopropyltrimethoxysilane, γ-aminopropyltriethoxysilane, γ-aminopropylmethyldimethoxysilane, γ-aminopropylmethyldiethoxysilane, N-(β-aminoethyl)-γ-aminopropyltrimethoxysilane, N-phenyl-γ-aminopropyltrimethoxysilane, and example of mercaptoalkoxysilanes includes, for example, γ-mercaptopropyltrimethoxysilane, γ-mercaptopropyltriethoxysilane.

The amount of silane compounds (c) to be added is 0.01 to 3.0 parts by weight, preferably 0.1 to 1.0 parts by weight based on 100 parts by weight of the resin component comprising the components (a) and (b).

If the amount of silane compound (c) to be added is within the above range, delamination, modulus of elasticity, strength of the resin composition will be improved.

The synthetic resin composition of the present invention may further contain various kinds of fibrous, powdery or laminar inorganic fillers depending on the purpose of application.

Example of fibrous fillers includes inorganic fibrous materials such as glass fibers, asbestos fibers, silica fibers, silica-alumina fibers, alumina fibers, zirconia fibers, boron nitride fibers, silicon nitride fibers, boron fibers, potassium titanate fibers, as well as fibers of metals such as stainless steel, aluminum, titanium, copper, brass.

On the other hand, example of powdery fillers includes carbon black, graphite, silica, quartz powder, glass beads, milled glass fiber, glass balloon, glass powder, silicate salts such as calcium silicate, aluminum silicate, kaolin, talc, clay, diatomaceous earth, wollastonite; metal oxides such as iron oxide, titanium oxide, zinc oxide, antimony trioxide, alumina; metal sulfate such as calcium carbonate, magnesium carbonate; as well as ferrite, various powdery metals such as silicon carbide, silicon nitride, boron nitride.

Example of laminar inorganic filler includes mica, glass flake, and foil of various metals.

In the present invention, one of these inorganic fillers may be used. Alternatively two or more of them may be used.

Depending on the desired physical properties, known inorganic fillers which have been processed with a surface finishing agent can be used. Example of such surface finishing agents includes functional compounds such as epoxy compounds, isocyanate compounds, titanate compounds, silane compounds.

The amount of inorganic fillers to be added is preferably 1 to 200 parts by weight, and particularly preferably 1 to 100 parts by weight based on 100 parts by weight of the resin component consisting of the components (a) and (b).

The synthetic resin composition of the present invention may further contain additives such as heat stabilizer, UV absorber, lubricant; organic compound containing bromine atoms and additives to impart flame retardancy such as antimony trioxide. Hindered phenol-type stabilizers and phosphorous stabilizers are particularly preferably used in the present invention.

The synthetic resin composition of the present invention may be conducted to injection molding at the temperature not less than fluidization initiation temperature of a liquid-crystal polyester resin (b) capable of forming an anisotropic molten phase and at the temperature not less than melting point of a thermoplastic resin (a) which does not form anisotropic molten phase under the conventional conditions for injection molding, yielding molded products.

As obvious from the above description, the resin composition of the present invention is reduced in delamination and excellent in modulus of elasticity and strength.

### Examples:

The present invention will be illustrated in detail with reference to the following examples, but the present invention is not construed to be limited to them.

### Example 1

Polybuthylene terephthalate-1 (hereinafter abbreviated as PBT-1), liquid-crystal polyester resin-2 (hereinafter abbreviated as LCP-2), phosphite ester-1, and silane compound-1 were respectively weighed as shown in Table 1, and mixed together. The mixture obtained was melt kneaded in a biaxial extruder having a screw of 30 mm diameter at a resin temperature (extrusion temperature) of 265°C and pelletized. Subsequently, the pellet was molded into test samples by injection molding at a resin temperature (molding temperature) of 265°C. The resulting test samples were used and flexural strength and flexural modulus thereof were determined according to ASTM D790. Further, test samples used for the determination of flexural properties were used to evaluate delamination by the following procedure. That is, adhesive tape was adhered onto the test sample and then peeled it off, then the amount of the removed resin of the surface layer was visually evaluated. The results are expressed as ○, △, X.

Composition of the resin composition, resin temperature during melt kneading and injection molding, and evaluation results are shown in Table 1.

### Examples 2 to 10

The test samples were prepared in the same manner as that described in Example 1, except that composition of the resin composition was changed as shown in Tables 1 and 2, and the resin temperature during melt kneading and injection molding were those shown in Tables 1 and 2, and the samples were evaluated. The results are shown in Tables 1 and 2.

### Example 11

Twenty parts by weight of glass fiber-1 based on 100 parts by weight of the resin component was added to the resin composition having the same composition as that in Example 1. Addition of glass fiber-1 and that of other components were conducted at the same time. The test samples were prepared in the same manner as that in Example 1 using the mixture obtained, and evaluated. The results are shown in Table 3.

### Example 12

Twenty parts by weight of glass fiber-1 based on 100 parts by weight of the resin component was added to the resin composition having the same composition as that in Example 6. Addition of glass fiber-1 and that of other components were conducted at the same time. The test samples were prepared in the same manner as that in Example 1 using the mixture obtained, and evaluated. The results are shown in Table 3.

### Comparative Examples 1 to 9

Resin compositions were prepared according to the method corresponding to those in Examples 1 to 12, except that silane compound (c) was not added as shown in Tables 1 to 3. The test samples were prepared in the same manner as that in Example 1 using the resin composition obtained, and evaluated. The results are shown in Tables 1 to 3.

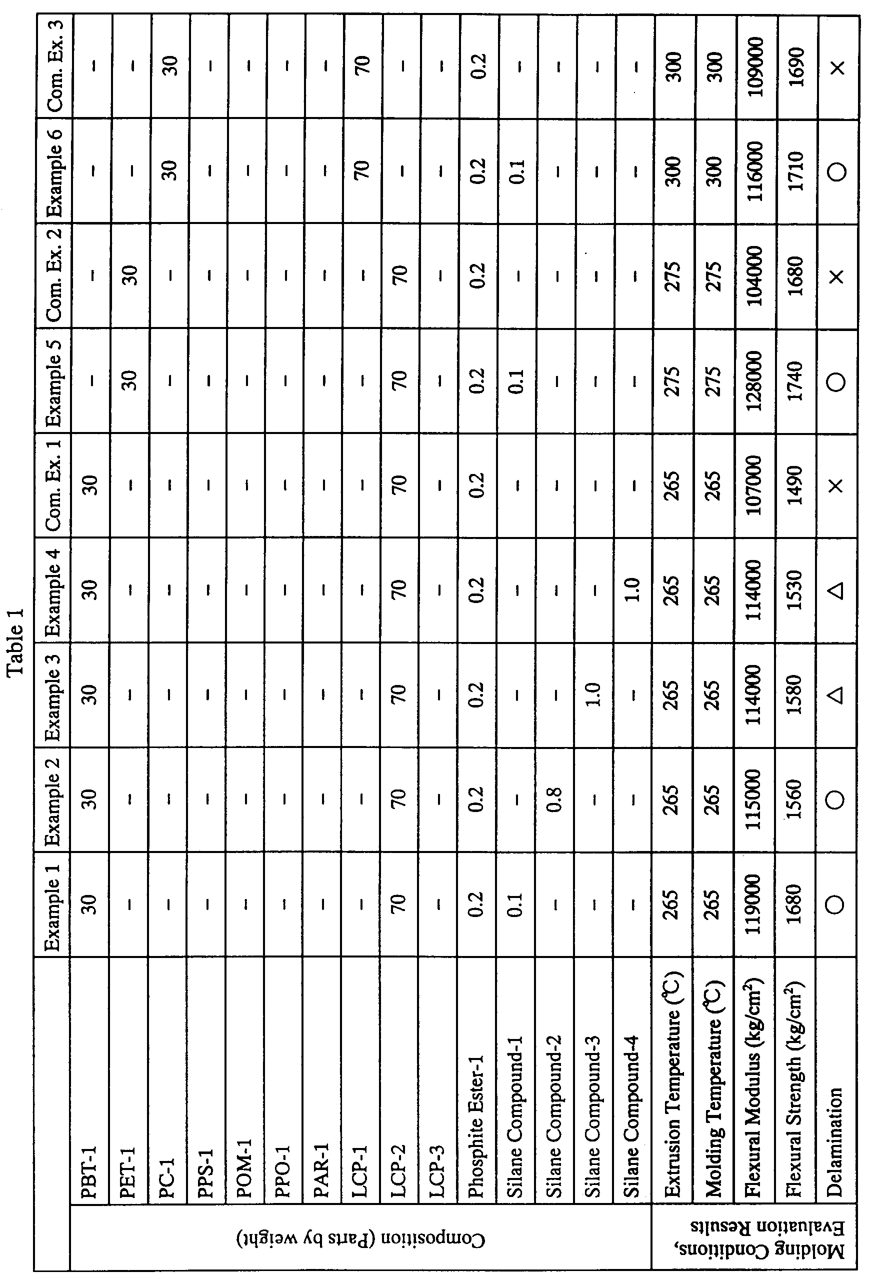

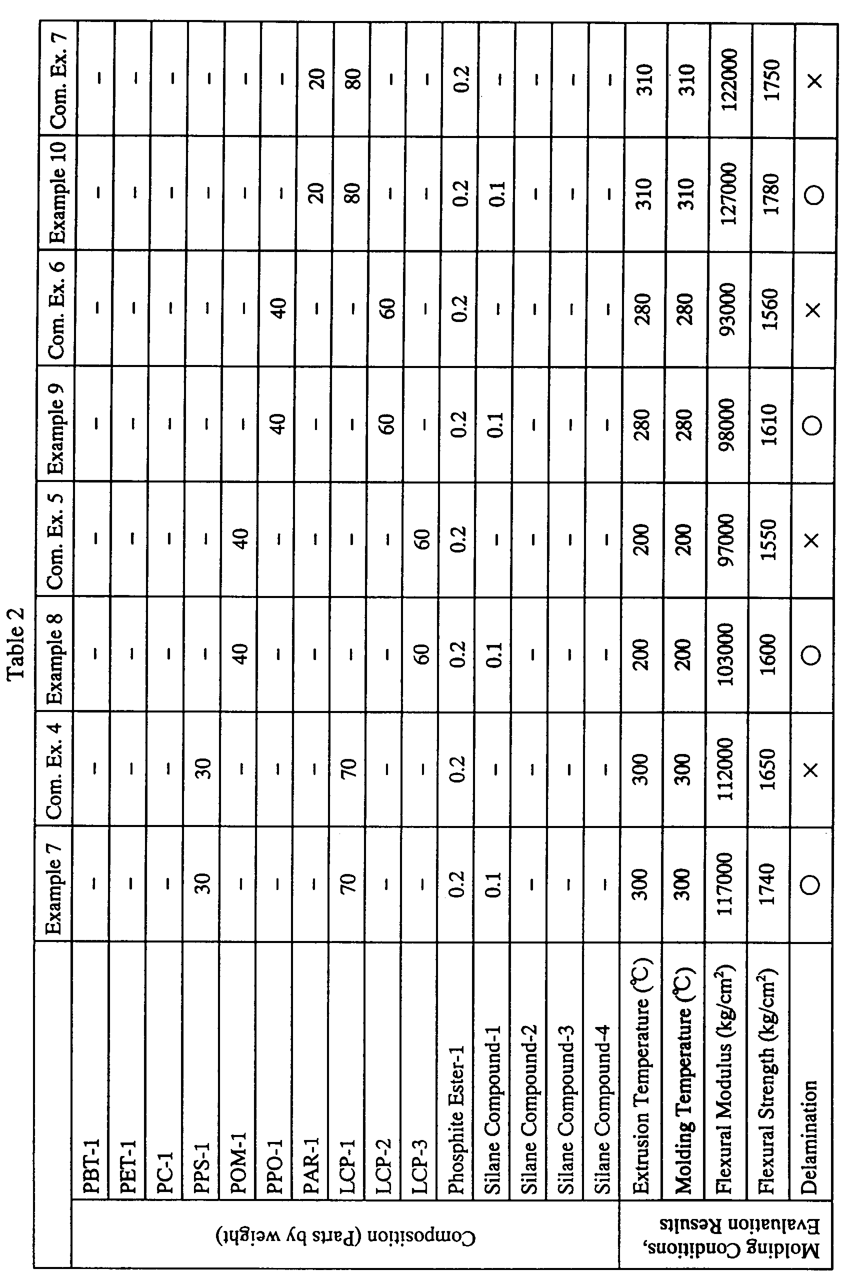

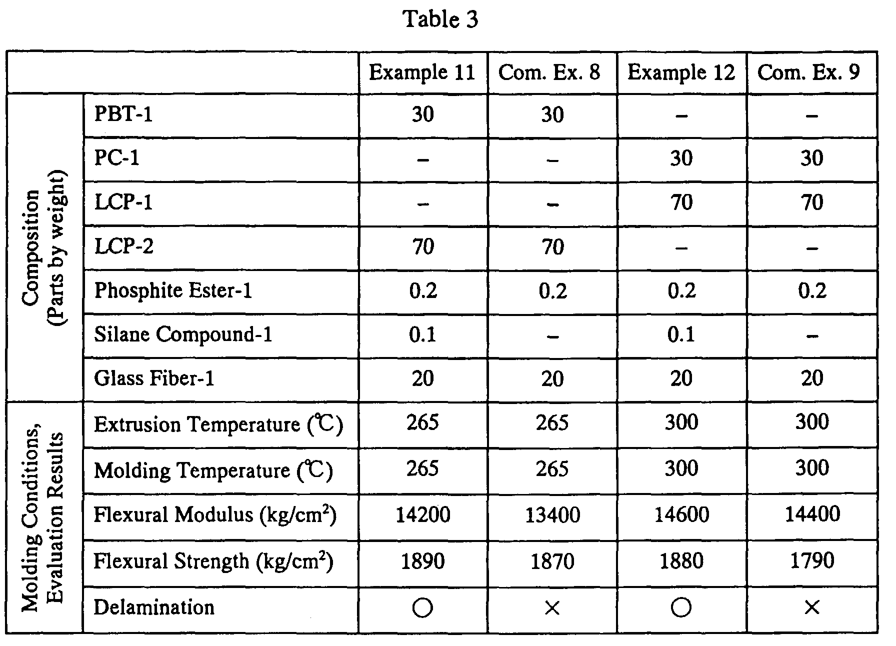

In the above description and tables, abbreviations are as follows:
- PBT-1:: Polybutylene terephthalate-1, manufactured by Polyplastics, Duranex 600FP
- PET-1:: Polyethylene terephthalate-1, manufactured by Kanegafuchi Kagaku, Bellpet EFG-1
- PC-1:: Polycarbonate-1, manufactured by Mitsubishi Gas Kagaku, Upiron H-3000
- PPS-1:: Polyphenylene sulfide-1, manufactured by Kureha Kagaku Kogyo, Fortron, Melt viscosity: 1,500 poise (310°C, 1,000 sec⁻¹)
- POM-1:: Polyoxymethylene-1, manufactured by Polyplastics, Duracon M90-44
- PPO-1:: Polyphenylene oxide, manufactured by Mitsubishi Gas Kagaku, Upiace AH-60
- PAR-1:: Polyallylate-1, manufactured by Unichica, U-polymer U-1000
- LCP-1:: Liquid-crystal polyester resin-1, manufactured by Polyplastics, Bectra A950
- LCP-2:: Liquid-crystal polyester resin-2, a liquid polyester resin comprising hydroxybenzoic acid and 2,6-hydroxynaphthoic acid wherein mole ratio of 2,6-hydroxynaphthoic acid to hydroxybenzoic acid is 60/40, melt viscosity: 450 poise (280°C, 1,000 sec⁻¹)
- LCP-3:: Liquid polyester resin-3, manufactured by Unichica, Lodran LC3000
- Phosphite ester-1:: manufactured by Adeca-Argus, Adecastap PEP-36
- Silane compound-1:: γ-aminopropyltriethoxysilane
- Silane compound-2:: γ-aminopropylmethyldiethoxysilane
- Silane compound-3:: vinyltriethoxysilane
- Silane compound-4:: γ-mercaptopropyltriethoxysilane
- Glass fiber-1:: manufactured by Nihon Denki Glass,
ECS03T187H
Duranex, Bellpet, Upiron, Fortron, Duracon, Upiace, U-polymer, Bectra, Lodran, Adecastap are trade marks.

## Claims

1. A synthetic resin composition produced by blending 100 parts by weight of a resin component comprising 1 part by weight to less than 50 parts by weight of a thermoplastic resin (a) which does not exhibit anisotropy in a molten state and more than 50 parts by weight to 99 parts by weight of a liquid-crystal polyester resin (b) capable of forming an anisotropic molten phase with 0.01 to 3.0 part by weight of at least one silane compound (c) selected from among vinylalkoxysilanes, aminoalkoxysilanes and mercaptoalkoxysilanes.

2. A synthetic resin composition according to Claim 1, wherein the thermoplastic resin (a) which does not exhibit anisotropy in a molten state is a thermoplastic resin having an ester, amide, imide, carboxyl, hydroxyl, amino or mercapto group in the main chain and/or at the end(s) thereof.

3. A synthetic resin composition according to Claim 1 or 2, which further contains 1 to 200 parts by weight of an inorganic filler per 100 parts by weight of the resin component comprising the thermoplastic resin (a) and the liquid-crystal polyester resin (b).
